# EUROPEAN PATENT SPECIFICATION

(11) **EP 3 626 860 B1**
(45) Date of publication and mention of the grant of the patent: **10.03.2021**
(21) Application number: 19164016.8
(22) Date of filing: 20.03.2019
(51) Int. Cl.: C25B 1/10, C25B 9/08, C25B 13/02

(54) **HYDROGEN PRODUCTION APPARATUS**
VORRICHTUNG ZUR WASSERSTOFFERZEUGUNG
APPAREIL DE PRODUCTION D'HYDROGÈNE

(30) Priority: 18.09.2018 JP 2018173237
(43) Date of publication of application: 25.03.2020
(73) Proprietor: KABUSHIKI KAISHA TOSHIBA, Minato-ku Tokyo (JP)
(72) Inventor: Murayama, Hirotoshi, Tokyo (JP)
(74) Representative: Hoffmann Eitle

(56) References cited:
- US-A- 4 844 786
- US-A1- 2015 322 578
- US-A1- 2018 171 494
- US-B1- 6 562 446

## Description

### FIELD

Embodiments described herein relate generally to a a hydrogen production apparatus.

### BACKGROUND

Hydrogen gas can be produced by electrolyzing water using an electrolyte solution. It is necessary for a production apparatus of hydrogen gas to produce the hydrogen gas having higher purity. US 6562 446 B1 is concerned with a multilayer polymer electrolyte-membrane. US 2018/171 494 A1 is concerned with alkaline water electrolysis diaphragm. US 2015/322578 A1 is concerned with membrane-electrode assembly. US 4 844 786 A is concerned with means for electrophoresis.

### BRIEF DESCRIPTION OF THE DRAWINGS

FIG. 1 is a block diagram showing a hydrogen production apparatus according to a first embodiment;

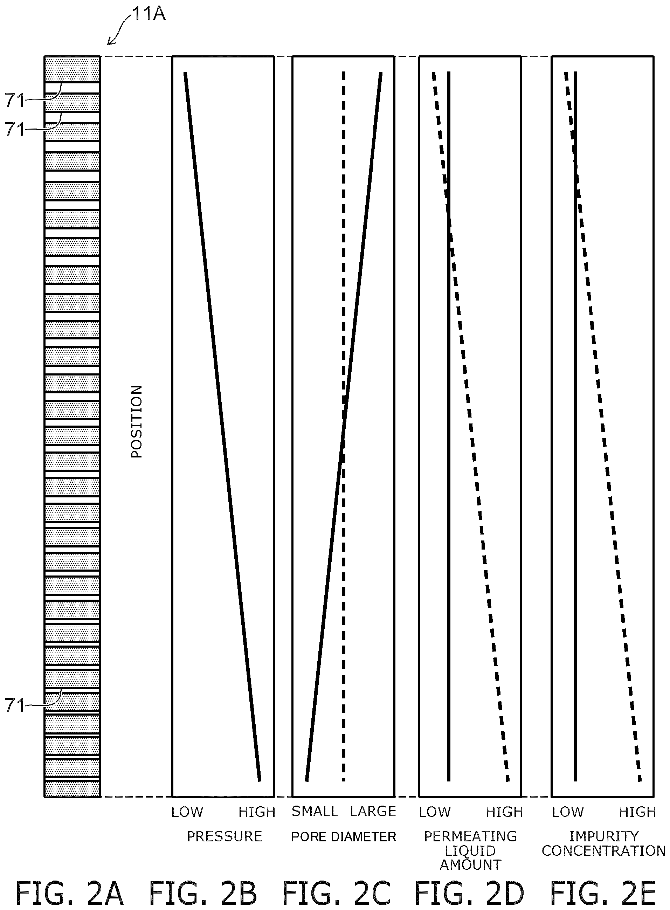

FIG. 2A is a cross-sectional view showing a diaphragm according to the first embodiment; FIG. 2B is a graph showing pressure distribution of an electrolyte solution applied to the diaphragm, in which the vertical axis is the position, and the horizontal axis is the pressure; FIG. 2C is a graph showing position dependence of a pore diameter, in which the vertical axis is the position, and the horizontal axis is the pore diameter; FIG. 2D is a graph showing position dependence of permeating liquid amount, in which the vertical axis is the position, and the horizontal axis is the permeating liquid amount; and FIG. 2E is a graph showing dependence of impurity concentration of a hydrogen gas on production position, in which the vertical axis is the position, and the horizontal axis is the impurity concentration of the hydrogen gas;
FIG. 3 is a cross-sectional view showing the diaphragm vicinity of the hydrogen production apparatus according to the first embodiment;
FIG. 4 shows an electrolytic cell of a hydrogen production apparatus according to a second embodiment;
FIG. 5 shows an electrolytic cell of a hydrogen production apparatus not according to the invention;
FIG. 6 shows an electrolytic cell of a hydrogen production apparatus not according to the invention; and
FIG. 7A shows a positive-side cell of the of the electrolytic cell shown in FIG. 6;

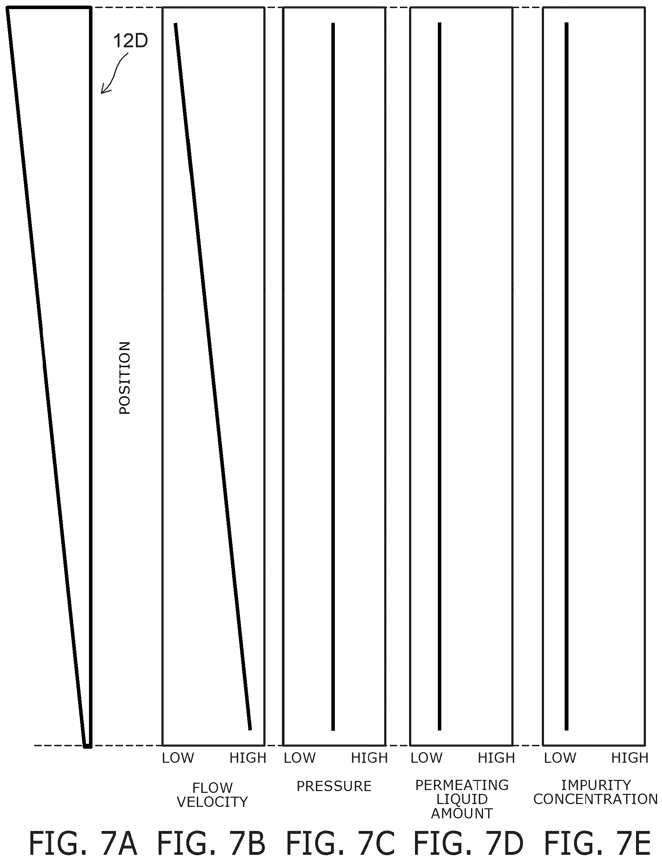

FIG. 7B is a graph showing flow velocity distribution of an electrolyte solution, in which the vertical axis is the position, and the horizontal axis is the flow velocity; FIG. 7C is a graph showing pressure distribution of the electrolyte solution applied to a diaphragm, in which the vertical axis is the position, and the horizontal axis is the pressure; FIG. 7D is a graph showing position dependence of a permeating liquid amount, in which the vertical axis is the position, and the horizontal axis is the permeating liquid amount; and FIG. 7E is a graph showing dependence of impurity concentration of a hydrogen gas on production position, in which the vertical axis is the position, and the horizontal axis is the impurity concentration of the hydrogen gas.

### DETAILED DESCRIPTION

The present invention relates to the hydrogen production apparatus of claim 1. The dependent claims relate to certain embodiments of the hydrogen apparatus of the present invention.

### First embodiment

First, a first embodiment will be described.

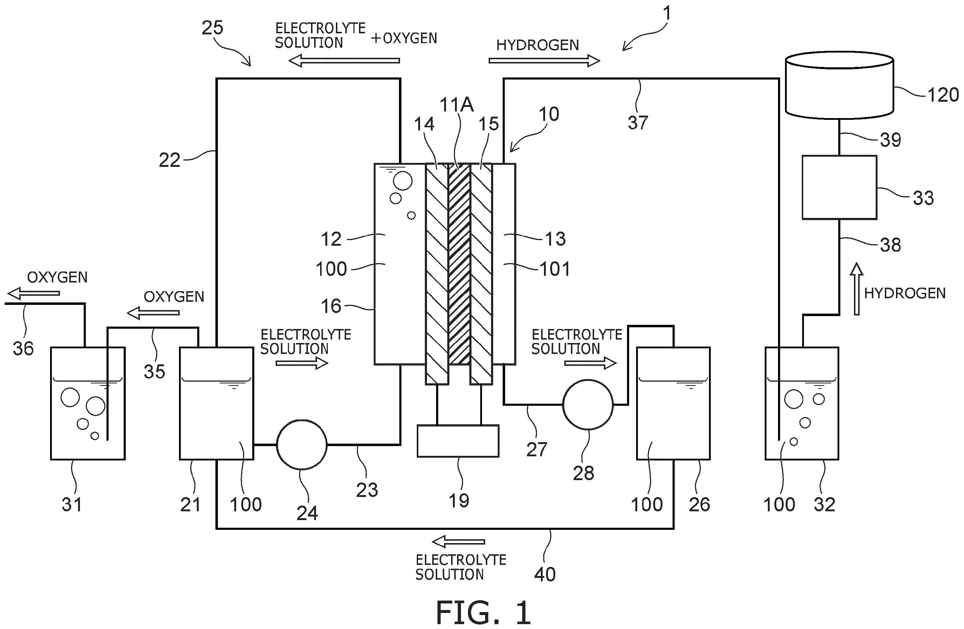

FIG. 1 is a block diagram showing a hydrogen production apparatus according to the embodiment.

FIG. 2A is a cross-sectional view showing the diaphragm according to the embodiment; FIG. 2B is a graph showing the pressure distribution of the electrolyte solution applied to the diaphragm, in which the vertical axis is the position, and the horizontal axis is the pressure; FIG. 2C is a graph showing the position dependence of the pore diameter, in which the vertical axis is the position, and the horizontal axis is the pore diameter; FIG. 2D is a graph showing the position dependence of the permeating liquid amount, in which the vertical axis is the position, and the horizontal axis is the permeating liquid amount; and FIG. 2E is a graph showing the dependence of the impurity concentration of the hydrogen gas on the production position, in which the vertical axis is the position, and the horizontal axis is the impurity concentration of the hydrogen gas.

The position shown in the vertical axes of FIGS. 2B to 2E corresponds to the position of the cross-sectional view of FIG. 2A.

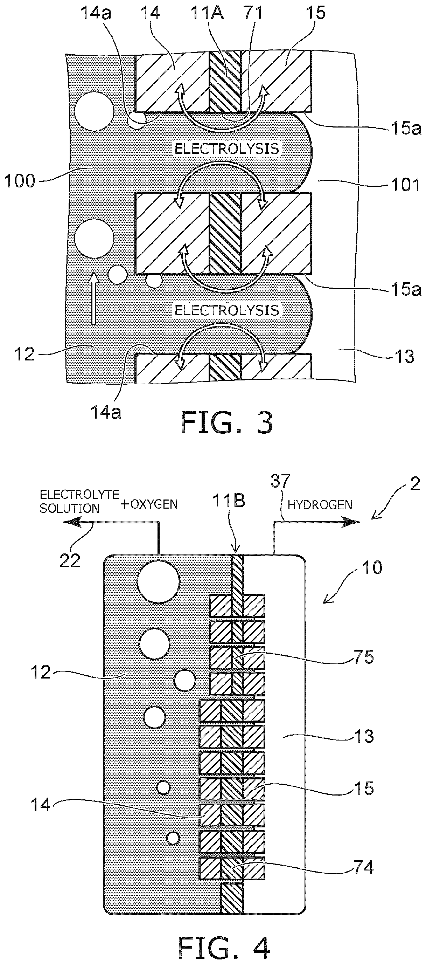

FIG. 3 is a cross-sectional view showing the diaphragm vicinity of the hydrogen production apparatus according to the embodiment.

As shown in FIG. 1, an electrolytic cell 10 is provided in the hydrogen production apparatus 1 according to the embodiment. Also, in the embodiment, for example, an alkaline electrolyte solution 100 is used as the electrolyte solution. However, the electrolyte solution may be neutral or acidic. A housing 16 is provided in the electrolytic cell 10; and a diaphragm 11A is provided inside the housing 16. The interior of the housing 16 is partitioned into a positive-side cell 12 and a negative-side cell 13 by the diaphragm 11A. The diaphragm 11A is, for example, a porous membrane made of a resin material, and is a membrane that allows passage of water molecules and ions but does not allow passage of large bubbles. The diaphragm 11A may be formed of an insulative porous material and may be formed of, for example, a ceramic material.

The thickness, i.e., the length in the arrangement direction of the positive-side cell 12 and the negative-side cell 13, of the negative-side cell 13 is shorter than the thickness of the positive-side cell 12. Therefore, the volume of the negative-side cell 13 is smaller than the volume of the positive-side cell 12. A positive electrode 14 is provided inside the positive-side cell 12; and a negative electrode 15 is provided inside the negative-side cell 13. The positive electrode 14 and the negative electrode 15 contact the diaphragm 11A and sandwich the diaphragm 11A.

The alkaline electrolyte solution 100, e.g., a potassium hydroxide (KOH) aqueous solution, is held inside the positive-side cell 12. On the other hand, only an extremely small amount of the electrolyte solution 100 exists inside the negative-side cell 13; and a vapor phase 101 occupies the greater part of the negative-side cell 13. For example, the electrolyte solution 100 exists in not less than half of the volume of the positive-side cell 12; and the vapor phase 101 exists in not less than half of the volume of the negative-side cell 13. Therefore, the greater part, i.e., not less than half, of the surface of the positive electrode 14 on the side not contacting the diaphragm 11A contacts the electrolyte solution 100; and the greater part, i.e., not less than half, of the surface of the negative electrode 15 on the side not contacting the diaphragm 11A contacts the vapor phase 101.

For example, the negative electrode 15 has a mesh configuration; and many openings 15a are formed in the negative electrode 15 (referring to FIG. 3). The positive electrode 14 also has a mesh configuration similar to that of the negative electrode 15; and many openings 14a are formed in the positive electrode 14 (referring to FIG. 3). It is sufficient for the negative electrode 15 and the positive electrode 14 to have configurations in which many openings are formed; and the configurations are not limited to mesh configurations.

As shown in FIG. 2A, pores 71 of the diaphragm 11A are larger toward the part positioned at the upper part of the electrolytic cell 10 and smaller toward the part positioned at the lower part of the electrolytic cell 10. Therefore, the liquid permeability is higher toward the part of the diaphragm 11A positioned at the upper part of the electrolytic cell 10; and the liquid permeability is lower toward the part of the diaphragm 11A positioned at the lower part of the electrolytic cell 10. In the specification, the "liquid permeability" refers to the permeating liquid amount when various conditions such as the pressure difference between the two sides of the diaphragm 11A, the composition and the temperature of the electrolyte solution 100, etc., are constant in the state in which the diaphragm 11A is disposed along the horizontal direction. The "permeating liquid amount" refers to the amount of the liquid passing through the unit area of the diaphragm 11A. FIG. 2A is a schematic view; and the pores 71 are illustrated as being fewer and larger than the actual pores 71.

Although the diameters of the pores 71 have fluctuation, the average diameter of the pores 71 in the part of the diaphragm 11A positioned at the lower part of the electrolytic cell 10 is smaller than the average diameter of the pores 71 in the part of the diaphragm 11A positioned at the upper part of the electrolytic cell 10. For example, when the diaphragm 11A is divided into three parts having the same length along the vertical direction, and a microscope is used to observe the part (the upper part; the second part) disposed at the top and the part (the lower part; the first part) disposed at the bottom, the average diameter of ten pores 71 in the lower part is smaller than the average diameter of ten pores 71 in the upper part. For example, a circumcircle of the pore 71 is drawn in a microscope image; and the diameter of the circumcircle can be used as the diameter of the pore 71.

Parts of the hydrogen production apparatus 1 other than the electrolytic cell 10 will now be described.

As shown in FIG. 1, a rectifier 19 is provided in the hydrogen production apparatus 1. Electrical power from outside the hydrogen production apparatus 1 is supplied to the rectifier 19; and the rectifier 19 applies direct current power between the positive electrode 14 and the negative electrode 15.

A positive-side electrolyte solution tank 21 is provided in the hydrogen production apparatus 1. A pipe 22 is connected between the upper part of the positive-side cell 12 and the upper part of the positive-side electrolyte solution tank 21. In the specification, "connected" refers to being mechanically linked so that a fluid can flow between the interiors. A pipe 23 is connected between the lower part of the positive-side electrolyte solution tank 21 and the lower part of the positive-side cell 12. A pump 24 is interposed partway through the pipe 23. A flow channel 25 that has a loop configuration is formed of the positive-side cell 12, the pipe 22, the positive-side electrolyte solution tank 21, the pipe 23, and the pump 24. The electrolyte solution 100 is circulated along the flow channel 25 by the pump 24 operating.

A negative-side electrolyte solution tank 26 is provided in the hydrogen production apparatus 1. A pipe 27 is connected between the lower part, e.g., the bottom surface, of the negative-side cell 13 and the upper part of the negative-side electrolyte solution tank 26. A pump 28 is interposed partway through the pipe 27. The electrolyte solution 100 that collects in the lower part of the negative-side cell 13 is exhausted via the pipe 27 into the negative-side electrolyte solution tank 26 by the pump 28 operating. However, in the hydrogen production apparatus 1, a pump is not provided to move the electrolyte solution 100 from the negative-side electrolyte solution tank 26 to the negative-side cell 13. Therefore, the electrolyte solution 100 is not circulated between the negative-side cell 13 and the negative-side electrolyte solution tank 26; and other than the electrolyte solution 100 seeping from the openings 15a of the negative electrode 15, the electrolyte solution 100 moves only unidirectionally from the negative-side cell 13 to the negative-side electrolyte solution tank 26.

As shown in FIG. 1, an oxygen gas scrubbing tower 31, a hydrogen gas scrubbing tower 32, a compressor 33, and pipes 35 to 40 are provided in the hydrogen production apparatus 1. A hydrogen storage tank 120 is provided outside the hydrogen production apparatus 1. The pipe 35 is connected between the upper part of the positive-side electrolyte solution tank 21 and the lower part of the oxygen gas scrubbing tower 31; and the pipe 36 is drawn out outside the hydrogen production apparatus 1 from the upper part of the oxygen gas scrubbing tower 31. The pipe 37 is connected between the upper part of the negative-side cell 13 and the lower part of the hydrogen gas scrubbing tower 32; the pipe 38 is connected between the upper part of the hydrogen gas scrubbing tower 32 and the compressor 33; and the pipe 39 is connected between the compressor 33 and the external hydrogen storage tank 120. The pipe 40 is connected between the positive-side electrolyte solution tank 21 and the negative-side electrolyte solution tank 26. The pipe 27, the pump 28, the negative-side electrolyte solution tank 26, and the pipe 40 are a unit that moves the electrolyte solution 100 from the bottom part of the negative-side cell 13 to the positive-side electrolyte solution tank 21.

Operations of the hydrogen production apparatus according to the embodiment will now be described.

As shown in FIG. 1, the electrolyte solution 100 is introduced to the positive-side electrolyte solution tank 21 and the positive-side cell 12 of the electrolytic cell 10. On the other hand, the electrolyte solution 100 is not introduced to the negative-side cell 13; and the interior of the negative-side cell 13 remains as the vapor phase 101. The electrolyte solution 100 is an alkaline aqueous solution and is, for example, a potassium hydroxide aqueous solution. A scrubbing liquid, e.g., purified water, is introduced to the oxygen gas scrubbing tower 31 and the hydrogen gas scrubbing tower 32. By the pump 24 operating, the electrolyte solution 100 is circulated along the flow channel 25 in the order of (positive-side electrolyte solution tank 21 → pipe 23 → positive-side cell 12 → pipe 22 → positive-side electrolyte solution tank 21).

At this time, as shown in FIG. 3, the electrolyte solution 100 that is filled into the positive-side cell 12 seeps to the interface vicinity between the negative electrode 15 and the vapor phase 101 via the openings 14a of the positive electrode 14, the pores 71 of the diaphragm 11A, and the openings 15a of the negative electrode 15 and stops at the outlet vicinity of the openings 15a due to the surface tension of the electrolyte solution 100. Therefore, the positive electrode 14 and the negative electrode 15 both contact the electrolyte solution 100.

When electrical power is supplied from the outside to the rectifier 19 in this state as shown in FIG. 1, the rectifier 19 supplies direct current power between the positive electrode 14 and the negative electrode 15. Thereby, the following reaction occurs in the electrolyte solution 100 between the positive electrode 14 and the negative electrode 15.
Positive side:

   2OH⁻ → (1/2)O₂ + H₂O + 2e⁻
Negative side:

   2H₂O + 2e⁻ → H₂ + 2OH⁻

As a result, the water is electrolyzed; water (H₂O) and oxygen gas (O₂) are produced in the positive-side cell 12; and in the negative-side cell 13, water is consumed and hydrogen gas (H₂) is produced. Although the oxygen gas that is produced clings at the vicinity of the openings 14a of the positive electrode 14 as small bubbles, the oxygen gas is stripped from the positive electrode 14 by the circulating electrolyte solution 100 and is moved into the upper part of the positive-side cell 12. On the other hand, the hydrogen gas that is produced diffuses as-is inside the vapor phase 101 via the openings 15a of the negative electrode 15 and moves into the upper part of the negative-side cell 13.

The oxygen gas that is produced in the positive-side cell 12 flows with the electrolyte solution 100 via the pipe 22 into the positive-side electrolyte solution tank 21 and is separated from the electrolyte solution 100 inside the positive-side electrolyte solution tank 21. The oxygen gas that is separated is pulled into the oxygen gas scrubbing tower 31 via the pipe 35; the electrolyte solution 100 is further removed by the oxygen gas contacting the scrubbing liquid; subsequently, the oxygen gas is exhausted outside the hydrogen production apparatus 1 via the pipe 36.

On the other hand, the hydrogen gas that is produced in the negative-side cell 13 is pulled into the hydrogen gas scrubbing tower 32 via the pipe 37; impurities are removed by contacting the scrubbing liquid; subsequently, the hydrogen gas is supplied to the compressor 33 via the pipe 38. The compressor 33 compresses the hydrogen gas and supplies the hydrogen gas to the hydrogen storage tank 120 via the pipe 39. The hydrogen storage tank 120 stores the hydrogen gas.

In the electrolysis process described above, a small amount of the electrolyte solution 100 may seep from the openings 15a of the negative electrode 15, travel along the surface of the negative electrode 15, fall, and collect at the bottom part of the negative-side cell 13. In such a case, the electrolyte solution 100 is moved into the negative-side electrolyte solution tank 26 via the pipe 27 by operating the pump 28. The electrolyte solution 100 that is held inside the negative-side electrolyte solution tank 26 is returned to the positive-side electrolyte solution tank 21 via the pipe 40. The embodiment may be modified to configure such that the electrolyte solution 100 is supplied into the negative-side electrolyte solution tank 26 via the pipe 27 with a hydraulic head, i.e. a difference of heights, between the negative-side cell 13 and the negative-side electrolyte solution tank 26. In other modified example, the electrolyte solution 100 may be supplied into the negative-side electrolyte solution tank 26 via the pipe 27 by its own weight. With those modifications, the pump 28 may be removed.

Thus, in the hydrogen production apparatus 1, hydrogen gas and oxygen gas are produced by electrolyzing the water inside the electrolyte solution 100. The hydrogen gas is stored in the hydrogen storage tank 120 and is recovered and utilized as appropriate.

However, as shown in FIG. 2B, the pressure (the water pressure) of the electrolyte solution 100 inside the electrolytic cell 10 is higher toward the lower part due to the effect of gravity. Therefore, if the diameters of the pores 71 of the diaphragm 11A are uniform as shown by the broken line in FIG. 2C, the permeating liquid amount of the electrolyte solution 100 passing through the pores 71 of the diaphragm 11A is higher toward the lower part of the electrolytic cell 10 as shown by the broken line in FIG. 2D. Oxygen that is produced in the positive-side cell 12 is included in the electrolyte solution 100; therefore, when the electrolyte solution 100 flows into the negative-side cell 13, the oxygen also flows into the negative-side cell 13 with the electrolyte solution 100. As a result, as shown by the broken line in FIG. 2E, the impurity concentration is undesirably higher for the hydrogen gas produced toward the lower part of the electrolytic cell 10. The greater part of the impurities of the hydrogen gas is oxygen gas.

Therefore, in the embodiment as shown in FIGS. 2A and 2C, the diameter of the pore 71 is smaller toward the part of the diaphragm 11A disposed in the lower part of the electrolytic cell 10. The liquid permeability of the diaphragm 11A decreases as the diameter of the pore 71 decreases. Thereby, the higher water pressure toward the lower part of the electrolytic cell 10 and the lower liquid permeability toward the lower part of the electrolytic cell 10 cancel each other; and the permeating liquid amount of the diaphragm 11A is substantially uniform as shown by the solid line in FIG. 2D. As a result, as shown by the solid line in FIG. 2E, the impurity concentration of the hydrogen gas that is produced is substantially uniform with respect to the position inside the electrolytic cell 10.

Effects of the embodiment will now be described.

As shown in FIG. 1, the oxygen that is produced by the electrolysis of the water mixes into the electrolyte solution 100 in the positive-side cell 12 of the electrolytic cell 10. The greater part of the oxygen mixing into the electrolyte solution 100 is separated from the electrolyte solution 100 inside the positive-side electrolyte solution tank 21; but a part of the oxygen remains inside the electrolyte solution 100 in a nanobubble state or in a state of being dissolved in the electrolyte solution 100. If the electrolyte solution 100 in which the oxygen thus remains mixes into the negative-side cell 13, the oxygen mixes into the hydrogen gas; and the purity of the hydrogen gas decreases.

However, in the hydrogen production apparatus 1 according to the embodiment as described above, the negative-side cell 13 is cut off from the flow channel 25; and the electrolyte solution 100 itself substantially does not leak out into the negative-side cell 13. Therefore, the oxygen inside the electrolyte solution 100 substantially does not mix into the hydrogen gas; and hydrogen gas that has higher purity can be obtained.

In the hydrogen production apparatus 1 as shown in FIGS. 2A and 2C, toward the part of the diaphragm 11A disposed in the lower part of the electrolytic cell 10, the diameter of the pore 71 is set to be smaller; and the liquid permeability is reduced. Therefore, as shown by the solid line in FIG. 2E, the impurity concentration of the hydrogen gas that is produced is substantially uniform with respect to the position inside the electrolytic cell 10. Thereby, the purity of the hydrogen gas can be increased even more.

It also may be considered to reduce the liquid permeability uniformly by uniformly reducing the diameter of the pore 71 in the entire diaphragm 11A. However, in such a case, the pressure of the electrolyte solution 100 is low at the upper part of the electrolytic cell 10; therefore, the permeating liquid amount undesirably becomes excessively low. Therefore, the electrolyte solution 100 that is supplied to the openings 15a from the positive-side cell 12 via the openings 14a of the positive electrode 14 and the pores 71 of the diaphragm 11A may be insufficient for the water consumed by the electrolysis inside the openings 15a of the negative electrode 15; and the electrolyte solution 100 is not filled reliably into the openings 15a. As a result, the efficiency of the electrolysis undesirably decreases.

According to the embodiment, the configuration of the hydrogen production apparatus 1 can be simplified because it is unnecessary to perform gas-liquid separation in the negative-side electrolyte solution tank 26. Then, it is possible to suppress the power consumption amount necessary to produce the hydrogen gas by the amount that the gas-liquid separation is unnecessary. Also, for the same electrical power supply amount, it is possible to increase the production amount of the hydrogen gas compared to the conventional production amount. Further, the volume of the negative-side cell 13 can be smaller than the volume of the positive-side cell 12 because it is unnecessary to hold a prescribed amount of the electrolyte solution 100 inside the negative-side cell 13. Thereby, it is possible to downsize the hydrogen production apparatus 1. As a result, the equipment cost, the transport cost, and the installation cost of the hydrogen production apparatus 1 can be reduced. Or, the hydrogen amount that can be produced can be increased by increasing the number of pairs of the positive-side cell 12 and the negative-side cell 13 while maintaining the size of the hydrogen production apparatus 1.

Although an example is shown in the embodiment in which the pore diameter of the pore 71 is changed consecutively according to the position, this is not limited thereto; and the diameter of the pore 71 may be changed in stages. For example, the diaphragm 11A may be divided into the two parts of the upper part and the lower part, and the pore diameter in the lower part may be smaller than the pore diameter in the upper part; or the diaphragm 11A may be divided into the three parts of the upper part, the middle part, and the lower part, the pore diameter in the middle part may be smaller than the pore diameter in the upper part, and the pore diameter in the lower part may be smaller than the pore diameter in the middle part. The number of parts when dividing the diaphragm 11A can be determined by considering the size of the electrolytic cell 10 and the construction cost of the diaphragm 11A.

Although an example is shown in the embodiment in which the liquid permeability of the diaphragm 11A is set to be different by setting the pore diameter of the pore 71 to be different according to the position of the diaphragm 11A, the method for setting the liquid permeability to be different is not limited thereto. For example, the liquid permeability of the diaphragm 11A may be set to be different by setting the pore diameter to be constant and by selectively performing surface processing of the diaphragm 11A. Or, the liquid permeability may be reduced by setting the pore diameter to be constant and by reducing the density of the pores 71, i.e., the number per unit area, toward the lower part of the diaphragm 11A. Or, these methods may be combined.

### Second embodiment

A second embodiment will now be described.

FIG. 4 shows an electrolytic cell of a hydrogen production apparatus according to the embodiment.

In the hydrogen production apparatus 2 according to the embodiment as shown in FIG. 4, a diaphragm 11B is provided inside the electrolytic cell 10. A lower part 74 of the diaphragm 11B is thicker than an upper part 75 of the diaphragm 11B. For example, the upper part 75 of the diaphragm 11B is made from one membrane; and two membranes are stacked in the lower part 74. On the other hand, in the diaphragm 11B, the diameters of the pores 71 (referring to FIG. 3) are substantially uniform.

In the embodiment as well, the liquid permeability at the lower part 74 of the diaphragm 11B can be set to be lower than the liquid permeability at the upper part 75. Thereby, the permeating liquid amount of the diaphragm 11B can be substantially uniform with respect to the position inside the electrolytic cell 10.

Otherwise, the configuration, the operations, and the effects of the embodiment are similar to those of the first embodiment described above.

### Third embodiment

A third embodiment (not according to the invention) ill now be described.

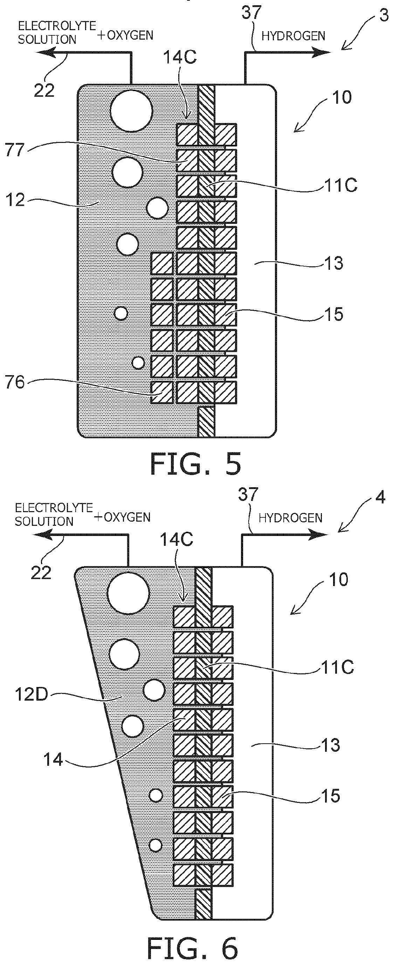

FIG. 5 shows an electrolytic cell of a hydrogen production apparatus according to the embodiment.

In the hydrogen production apparatus 3 according to the embodiment as shown in FIG. 5, the thickness of a positive electrode 14C is nonuniform; and a lower part 76 of the positive electrode 14C is thicker than an upper part 77 of the positive electrode 14C. For example, the upper part 77 of the positive electrode 14C is made from one mesh plate; and two mesh plates are stacked in the lower part 76. On the other hand, the thickness of a diaphragm 11C of the hydrogen production apparatus 3 is uniform. Also, the diameters of the pores 71 (referring to FIG. 3) are substantially uniform in the diaphragm 11C.

In the embodiment, the liquid permeability at the lower part 76 of the positive electrode 14C is lower than the liquid permeability at the upper part 77. The liquid permeability of the diaphragm 11C is uniform. In the embodiment as well, effects similar to those of the first embodiment can be obtained.

Otherwise, the configuration, the operations, and the effects of the embodiment are similar to those of the first embodiment described above.

### Fourth embodiment

A fourth embodiment (not according to the invention) will now be described.

FIG. 6 shows an electrolytic cell of a hydrogen production apparatus according to the embodiment.

FIG. 7A shows the positive-side cell of the embodiment; FIG. 7B is a graph showing the flow velocity distribution of the electrolyte solution, in which the vertical axis is the position, and the horizontal axis is the flow velocity; FIG. 7C is a graph showing the pressure distribution of the electrolyte solution applied to the diaphragm, in which the vertical axis is the position, and the horizontal axis is the pressure; FIG. 7D is a graph showing the position dependence of the permeating liquid amount, in which the vertical axis is the position, and the horizontal axis is the permeating liquid amount; and FIG. 7E is a graph showing the dependence of the impurity concentration of the hydrogen gas on the production position, in which the vertical axis is the position, and the horizontal axis is the impurity concentration of the hydrogen gas.

The position shown in the vertical axes of FIGS. 7B to 7E corresponds to the position in FIG. 7A.

In the hydrogen production apparatus 4 according to the embodiment as shown in FIG. 6, a positive-side cell 12D of the electrolytic cell 10 has an inverted truncated quadrilateral pyramid configuration; and the thickness, i.e., the length in the direction from the positive-side cell 12D toward the negative-side cell 13, of the positive-side cell 12D is shorter toward the lower part. On the other hand, the width, i.e., the length in a direction perpendicular to the page surface of FIG. 6, of the positive-side cell 12D is constant. As a result, in the positive-side cell 12, the flow channel of the electrolyte solution 100 is narrower toward the lower part. Such a configuration of the positive-side cell 12 may be realized by the housing 16 having an inverted truncated quadrilateral pyramid configuration, or by setting the configuration of the housing 16 to be a normal rectangular parallelepiped and disposing an obstacle inside the positive-side cell 12 to impede the flow of the electrolyte solution 100.

In the hydrogen production apparatus 4, the thickness of the diaphragm 11C is uniform. Also, in the diaphragm 11C, the pore diameters of the pores 71 (referring to FIG. 3) are constant with respect to the position of the electrolytic cell 10. The diameters of the pores 71 (referring to FIG. 3) are substantially uniform in the diaphragm 11C.

An operation of the hydrogen production apparatus according to the embodiment will now be described.

As shown in FIG. 6 and FIG. 7A, the flow channel of the electrolyte solution 100 is narrower toward the lower part in the positive-side cell 12D of the hydrogen production apparatus 4. Thereby, as shown in FIG. 7B, the flow velocity of the electrolyte solution 100 is higher toward the lower part of the positive-side cell 12D. The pressure decreases as the flow velocity increases due to Bernoulli's principle. Therefore, as shown in FIG. 7C, the pressure of the electrolyte solution 100 is substantially uniform in the positive-side cell 12D. As a result, the permeating liquid amount is substantially uniform as shown in FIG. 7D; and the impurity concentration of the hydrogen gas is substantially uniform as shown in FIG. 7E.

Thus, according to the embodiment, by setting the flow channel to be narrower toward the lower part of the positive-side cell 12D, the effect of gravity and the effect of the flow velocity cancel each other; and the pressure of the electrolyte solution 100 is substantially uniform inside the positive-side cell 12. In other words, in the embodiment, the flow channel at the lower part of the positive-side cell 12D is set to be narrow compared to the upper part of the positive-side cell 12D; thereby, at the lower part of the positive-side cell 12D, the flow velocity of the electrolyte solution 100 is increased; and the pressure is reduced. Thereby, the liquid permeability of the electrolyte solution 100 at the lower part of the diaphragm 11C is reduced and is substantially equal to the liquid permeability of the electrolyte solution 100 at the upper part of the diaphragm 11C. Thus, the liquid permeability of the diaphragm may be determined by the size of the surrounding flow channel. As a result, both the excessive penetration of the electrolyte solution 100 at the lower part of the electrolytic cell 10 and an insufficient permeating liquid amount of the electrolyte solution 100 at the upper part can be avoided; and hydrogen gas that has high purity can be produced.

Otherwise, the configuration, the operations, and the effects of the embodiment are similar to those of the first embodiment described above.

According to the embodiments described above, a hydrogen production apparatus can be realized in which hydrogen gas having high purity can be produced. While certain embodiments have been described, these embodiments have been presented by way of example only, and are not intended to limit the scope of the claims. Indeed, the novel embodiments described herein may be embodied in a variety of other forms; furthermore, various omissions, substitutions and changes in the form of the embodiments described herein may be made without departing from the scope of the claims. Additionally, the embodiments described above can be combined mutually.

## Claims

1. A hydrogen production apparatus, comprising:
a housing (16) holding an electrolyte solution (100);
a diaphragm (11A) for the electrolysis of water, the diaphragm partitioning an interior of the housing (16) into a positive-side cell (12) and a negative-side cell (13);
a positive electrode (14) provided inside the positive-side cell (12); and
a negative electrode (15) provided inside the negative-side cell (15), wherein the diaphragm (11A) is a porous membrane allowing passage of water molecules and ions, but not allowing passage of large bubbles, the porous membrane comprising:
a first part (74); and
a second part (75), the first part (74) being provided lower that the second part (75) in a vertical direction of the membrane and with respect to the apparatus,
wherein a liquid permeability of the first part (74) is lower than a liquid permeability of the second part (75).

2. The apparatus according to claim 1, wherein
a plurality of pores (71) are formed in the diaphragm, and
a diameter of the pores in the first part (74) is smaller than a diameter of the pores in the second part (75).

3. The apparatus according to claim 1, wherein the first part (74) is thicker than the second part (75).

4. The apparatus according to claim 1, wherein
a plurality of pores (71) is formed in the diaphragm (11A), and
a diameter of the pores in a lower part of the diaphragm is smaller than a diameter of the pores in an upper part of the diaphragm.

5. The apparatus according to claim 1 or claim 4, wherein a flow channel of the electrolyte solution in a part of the positive-side cell (12D) corresponding to the first part is narrower than a flow channel of the electrolyte solution in a part of the positive-side cell corresponding to the second part.

6. The apparatus according to claim 5, wherein the positive-side cell (12D) has an inverted truncated quadrilateral pyramid configuration.

7. The apparatus according to any one of claims 1 to 6, wherein a volume of the negative-side cell (13) is smaller than a volume of the positive-side cell (12).

8. The apparatus according to any one of claims 1 to 7, further comprising:
a positive-side electrolyte solution tank (21), the electrolyte solution being circulated between the positive-side cell and the positive-side electrolyte solution tank; and
a pump (24) supplying the electrolyte solution from the positive-side electrolyte solution tank to the positive-side cell,
a pump not being provided to supply the electrolyte solution to the negative-side cell.

## Patentansprüche

1. Vorrichtung zur Herstellung von Wasserstoff, aufweisend:
ein Gehäuse (16), das eine Elektrolytlösung (100) aufnimmt;
ein Diaphragma (11A) für die Elektrolyse von Wasser, wobei das Diaphragma einen Innenraum des Gehäuses (16) in eine positivseitige Zelle (12) und eine negativseitige Zelle (13) unterteilt;
eine positive Elektrode (14), die in der positivseitigen Zelle (12) vorgesehen ist; und
eine negative Elektrode (15), die in der negativseitigen Zelle (15) vorgesehen ist, wobei das Diaphragma (11A) eine poröse Membran ist, die den Durchgang von Wassermolekülen und Ionen erlaubt, aber nicht den Durchgang von großen Blasen erlaubt, wobei die poröse Membran aufweist:
einen ersten Teil (74); und
einen zweiten Teil (75), wobei der erste Teil (74) in einer vertikalen Richtung der Membran und in Bezug auf die Vorrichtung niedriger als der zweite Teil (75) vorgesehen ist,
wobei eine Flüssigkeitsdurchlässigkeit des ersten Teils (74) niedriger ist als eine Flüssigkeitsdurchlässigkeit des zweiten Teils (75).

2. Vorrichtung nach Anspruch 1, wobei
eine Vielzahl von Poren (71) in der Membran ausgebildet sind, und
ein Durchmesser der Poren in dem ersten Teil (74) kleiner ist als ein Durchmesser der Poren in dem zweiten Teil (75).

3. Vorrichtung nach Anspruch 1, wobei der erste Teil (74) dicker ist als der zweite Teil (75).

4. Vorrichtung nach Anspruch 1, wobei
eine Vielzahl von Poren (71) in der Membran (11A) ausgebildet ist, und
ein Durchmesser der Poren in einem unteren Teil des Diaphragmas kleiner ist als ein Durchmesser der Poren in einem oberen Teil des Diaphragmas.

5. Vorrichtung nach Anspruch 1 oder Anspruch 4, wobei ein Strömungskanal der Elektrolytlösung in einem Teil der positivseitigen Zelle (12D), der dem ersten Teil entspricht, schmaler ist als ein Strömungskanal der Elektrolytlösung in einem Teil der positivseitigen Zelle, der dem zweiten Teil entspricht.

6. Vorrichtung nach Anspruch 5, wobei die positivseitige Zelle (12D) eine umgekehrte vierseitige Pyramidenstumpfform aufweist.

7. Vorrichtung nach einem der Ansprüche 1 bis 6, wobei ein Volumen der negativseitigen Zelle (13) kleiner ist als ein Volumen der positivseitigen Zelle (12).

8. Vorrichtung nach einem der Ansprüche 1 bis 7, ferner aufweisend:
einen positivseitigen Elektrolytlösungstank (21), wobei die Elektrolytlösung zwischen der positivseitigen Zelle und dem positivseitigen Elektrolytlösungstank zirkuliert wird; und
eine Pumpe (24), die die Elektrolytlösung von dem positivseitigen Elektrolytlösungstank zu der positivseitigen Zelle zuführt, wobei
eine Pumpe nicht zum Zuführen der Elektrolytlösung zu der negativseitigen Zelle vorgesehen ist.

## Revendications

1. Appareil de production d'hydrogène comprenant :
un logement (16) contenant une solution électrolytique (100) ;
un diaphragme (11A) pour l'électrolyse de l'eau, le diaphragme cloisonnant un intérieur du logement (16) en une cellule côté positif (12) et une cellule côté négatif (13) ;
une électrode positive (14) prévue à l'intérieur de la cellule côté positif (12) ; et
une électrode négative (15) prévue à l'intérieur de la cellule côté négatif (15), dans lequel le diaphragme (11A) est une membrane poreuse permettant le passage de molécules d'eau et d'ions, mais ne permettant pas le passage de grosses bulles, la membrane poreuse comprenant :
une première partie (74) ; et
une seconde partie (75), la première partie (74) étant prévue plus bas que la seconde partie (75) dans une direction verticale de la membrane et par rapport à l'appareil,
dans lequel une perméabilité aux liquides de la première partie (74) est inférieure à une perméabilité aux liquides de la seconde partie (75).

2. Appareil selon la revendication 1, dans lequel
une pluralité de pores (71) sont formés dans le diaphragme, et
un diamètre des pores dans la première partie (74) est plus petit qu'un diamètre des pores dans la seconde partie (75).

3. Appareil selon la revendication 1, dans lequel la première partie (74) est plus épaisse que la seconde partie (75).

4. Appareil selon la revendication 1, dans lequel
une pluralité de pores (71) est formée dans le diaphragme (11A), et
un diamètre des pores dans une partie inférieure du diaphragme est plus petit qu'un diamètre des pores dans une partie supérieure du diaphragme.

5. Appareil selon la revendication 1 ou la revendication 4, dans lequel un canal d'écoulement de la solution électrolytique dans une partie de la cellule côté positif (12D) correspondant à la première partie est plus étroit qu'un canal d'écoulement de la solution électrolytique dans une partie de la cellule côté positif correspondant à la seconde partie.

6. Appareil selon la revendication 5, dans lequel la cellule côté positif (12D) présente une configuration de pyramide quadrilatérale tronquée inversée.

7. Appareil selon l'une quelconque des revendications 1 à 6, dans lequel un volume de la cellule côté négatif (13) est plus petit qu'un volume de la cellule côté positif (12).

8. Appareil selon l'une quelconque des revendications 1 à 7, comprenant en outre :
un réservoir de solution électrolytique côté positif (21), la solution électrolytique étant en circulation entre la cellule côté positif et le réservoir de solution électrolytique côté positif ; et
une pompe (24) fournissant la solution électrolytique du réservoir de solution électrolytique côté positif à la cellule côté positif,
une pompe n'étant pas prévue pour fournir la solution électrolytique à la cellule côté négatif.
